(19) Europäisches Patentamt
European Patent Office
Office européen des brevets

(11) **EP 1 492 690 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(21) Anmeldenummer: **03711832.0**

(22) Anmeldetag: **20.02.2003**

(51) Int Cl.:
*B60T 8/94* *(2006.01)*    *B60T 17/22* *(2006.01)*

(86) Internationale Anmeldenummer:
**PCT/DE2003/000527**

(87) Internationale Veröffentlichungsnummer:
**WO 2003/082646 (09.10.2003 Gazette 2003/41)**

(54) **VERFAHREN UND VORRICHTUNG ZUR ÜBERWACHUNG EINER BREMSANLAGE**

METHOD AND DEVICE FOR MONITORING A BRAKE SYSTEM

PROCEDE ET DISPOSITIF POUR SURVEILLER UN SYSTEME DE FREINAGE

(84) Benannte Vertragsstaaten:
**DE FR GB**

(30) Priorität: **30.03.2002 DE 10214456**

(43) Veröffentlichungstag der Anmeldung:
**05.01.2005 Patentblatt 2005/01**

(73) Patentinhaber: **ROBERT BOSCH GMBH**
**70442 Stuttgart (DE)**

(72) Erfinder:
• **WEEBER, Kai**
**71287 Weissach (DE)**
• **KNOOP, Michael**
**71638 Ludwigsburg (DE)**
• **LEIMBACH, Klaus-Dieter**
**71696 Moeglingen (DE)**

(56) Entgegenhaltungen:
**EP-A- 1 004 494**    **DE-A- 19 747 144**
**DE-A- 19 807 366**    **DE-A- 19 914 403**
**DE-A- 19 935 899**    **DE-A- 19 939 386**

**EP 1 492 690 B1**

**Beschreibung**

Stand der Technik

Die Erfindung betrifft ein Verfahren und eine Vorrichtung zur Erkennung einer Fehlfunktion einer Bremsanlage , insbesondere zur Erkennung einer Fehlfunktion der Raddrucksensorik einer Bremsanlage eines Kraftfahrzeugs während der Betätigung der Bremsanlage in Abhängigkeit von zwei Betriebsmodi mit den Merkmalen der unabhängigen Ansprüche.

Bei aktiven Lenksystemen, beispielsweise bekannt aus der DE 38 26 982 A, können die Bremsdrücke an den getrennt geregelten Rädern einer Achse erfaßt und deren Differenz ΔP unter Aussparung einer Totzone bei niedrigem ΔP zur Gewinnung eines Zusatzlenkwinkels δ benutzt werden. Dadurch wird die Fahrstabilität bei Bremsungen insbesondere auf inhomogenen Fahrbahnen maßgeblich erhöht.

Aus der Schrift DE 198 07 366 A1 ist ein Verfahren bzw. eine Vorrichtung bekannt, bei dem radindividuell der Druckaufbau auf eine unzulässige Abweichung vom einzuregelnden Solldruck abweicht. Liegt eine derartige unzulässige Abweichung vor, wird ein Notbremsbetrieb eingeleitet, indem die Drucksteuerung an diesem Rad mit dem an dem anderen Rad der gleichen Achse in einem Druckregelkreis erfolgt.

Die Schrift DE 197 47 144 A1 beschreibt ein Fahrzeugbewegungssteuerungssystem zur Aufrechterhaltung der Stabilität eines Fahrzeugs. Dabei wird ein abnormaler Zustand von zumindest einem Seitenbeschleunigungssensor oder dem Gierratensensor auf der Basis der Fahrzeugschlupfwinkelgeschwindigkeit bestimmt.

Die Schrift DE 199 35 899 A1 beschreibt ein Verfahren zum Betreiben eines Bremskraftverstärkers einer Bremsanlage eines Fahrzeugs, bei dem mittels eines Drucksensors ein in dem Bremsdruckspeicher des Bremskraftverstärkers herrschender Druckwert erfasst wird. Dieser Druckwert wird zeitlich überwacht und daraus ein Druckanstieg ermittelt, um eine gegebenenfalls auftretende Leckage zu erkennen.

Vorteile der Erfindung

Wie erwähnt beschreibt die Erfindung ein Verfahren beziehungsweise eine Vorrichtung zur Erkennung einer Fehlfunktion einer Bremsanlage eines Kraftfahrzeugs. Während der Betätigung der Bremsanlage können wenigstens zwei Betriebsmodi vorliegen. Der Kern der Erfindung besteht darin, dass eine Fehlfunktion auf eine erste Weise während des Vorliegens eines ersten Betriebsmodus und eine Fehlfunktion auf eine zweite Weise während des Vorliegens eines zweiten Betriebsmodus erkannt wird.

Der Vorteil der Erfindung besteht darin, dass mögliche Fehler einer Bremsanlage, insbesondere in der Raddrucksensorik der Bremsanlage in möglichst jedem Betriebsmodus der Bremsanlage festgestellt werden.

Enfindungsgemäß ist vorgesehen, dass die Bremsanlage derart ausgestaltet ist, dass Bremseingriffe unabhängig vom Wunsch des Fahrers des Kraftfahrzeugs vorgenommen werden können. Das Vorliegen des ersten Betriebsmodus wird dann erkannt, wenn während eines Bremsvorgangs kein radindividueller Bremseingriff stattfindet. Das Vorliegen des zweiten Betriebsmodus wird dann erkannt, wenn während eines Bremsvorgangs ein radindividueller Bremseingriff stattfindet. Bei der Überwachung der Bremsanlage wird während der Betätigung der Bremsanlage durch den Fahrer überprüft, ob ein zusätzlicher fahrerunabhängiger Bremseingriff stattfindet oder innerhalb einer gewissen Latenzzeit stattgefunden hat. Die Unterscheidung zwischen zwei vorliegenden Betriebsmodi findet also in Abhängigkeit vom Vorhandensein eines radindividuellen Bremseingriff statt, wobei insbesondere die Abfrage eines Eingriffs durch ein Antiblockiersystem (ABS) vorgesehen ist. Bei einem Antiblockiersystem findet bekanntermaßen ein radindividueller Bremseingriff dann statt, wenn das Rad eine Blockiertendenz aufweist. Im Falle einer Blockiertendenz wird in der Regel der Bremsdruck konstant gehalten oder vermindert. Vorteilhafterweise ist somit eine Fehlererkennung während Bremsungen mit und ohne radindividuelle Bremseingriffe möglich.

Erfindungsgemäß ist vorgesehen, dass bei der Betätigung der Bremsanlage Bremsdrücke an den Radbremsen modifiziert werden und das Kraftfahrzeug wenigstens eine Radachse aufweist und Bremsdruckgrößen erfaßt werden, die den Bremsdruck an wenigstens zwei Radbremsen einer Achse repräsentieren. Solange kein radindividueller Bremseingriff stattfindet und wenn nach Beendigung eines radindividuellen Bremseingriff eine Latenzzeit abgelaufen ist, wird eine die Differenz der erfaßten Radbremsdrücke repräsentierende Differenzgröße ermittelt. Die Fehlfunktion wird aufgrund der Überschreitung einer Differenz-Schwelle durch die Differenzgröße erkannt. Insbesondere ist dabei vorgesehen, dass die Fehlererkennung an einem Kraftfahrzeug mit wenigstens zwei Radachsen durchgeführt wird, wobei die Fehlererkennung bei jeder Radachse getrennt voneinander durchgeführt werden kann.

Erfindungsgemäß kann die Differenz-Schwelle unterschiedliche Werte annehmen. Hierdurch gelangt man zu einer an die jeweils vorliegenden Bremssituation angepaßte Fehlererkennung.

Erfindungsgemäß werden beim Erkennen des ersten Betriebsmodus unterschiedlichen Werte für die Differenz-Schwelle aufgrund der Anstiegsgeschwindigkeit des über alle Bremsdruckgrößen einer Achse gemittelten Bremsdrucks gesetzt. Die Anstiegsgeschwindigkeit kann durch eine Abschätzung mit Hilfe eines Differenzenquotienten ermittelt werden, wobei der Differenzenquotient abhängig von der Differenz zweier zu unterschiedlichen Zeiten erfaßten gemittelten Bremsdruckgrößen bestimmt wird. Zur Abschätzung der Anstiegsgeschwindigkeit kann vorteilhafterweise ein Maximalwert aus wenigstens zwei Differenzenquotienten herangezogen werden. Dies gleicht kurzzeitige Einbrüche des Gradienten aus, ohne dass die Dynamik der Gradientenberechnung verringert wird.

Als Bremsdruckgrößen können die offset-korrigierten Bremsdruckgrößen herangezogen werden, wobei der Offset aus dem tiefpass-gefilterten Bremsdrucksignal jeder einzelnen Radbremse abgeschätzt wird.

Bei Bremsanlagen ist in der Regel ein Hauptbremszylinder zur Aufbringung eines Bremsvordrucks vorgesehen. Mit Blick auf die Fehlererkennung während des Vorliegens des zweiten Betriebsmodus ist es vorteilhaft, den Wert für die Differenz-Schwelle in Abhängigkeit

- von einer den Vordruck im Hauptbremszylinder repräsentierenden Vordruckgröße und
- von der Anstiegsgeschwindigkeit, insbesondere vom Differenzenquotienten,

zu setzten.

Ein Vorteil der Erfindung besteht darin, dass die Fehlererkennung während beider Betriebsmodi in Abhängigkeit von der Dynamik des Drucksignals an den Radbremsen bzw. dem Hauptbremszylinder des Kraftfahrzeugs durchgeführt wird.

In einer weiteren Ausgestaltung ist vorgesehen, dass nach einem radindividuellen Bremseingriff die Fehlererkennung innerhalb einer vorgebbaren Zeitdauer wenigstens modifiziert wird. Hierbei ist insbesondere vorgesehen ist, dass nach einem radindividuellen Bremseingriff die Fehlererkennung innerhalb einer vorgebbaren Zeitdauer (Latenzzeit) ausgesetzt wird.

Weitere Vorteile ergeben sich aus der nachfolgenden Beschreibung von Ausführungsbeispielen bzw. aus den abhängigen Patentansprüchen.

Zeichnung

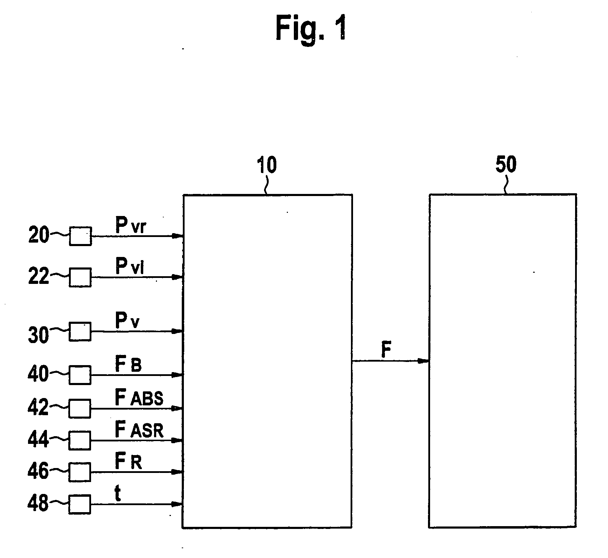

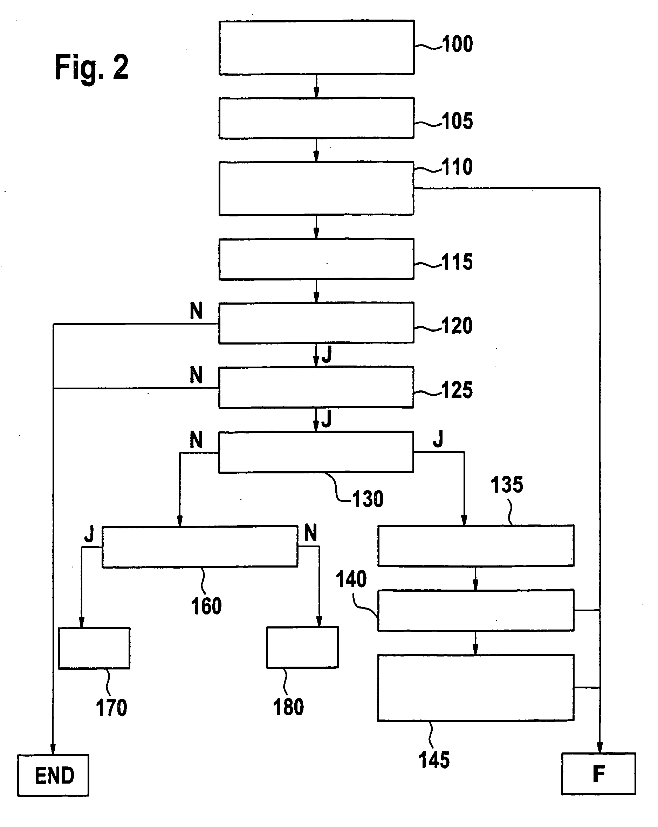

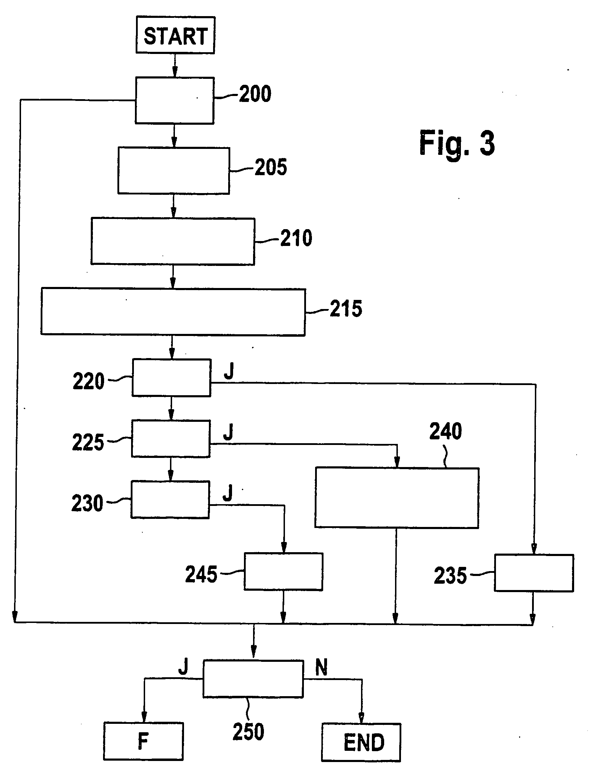

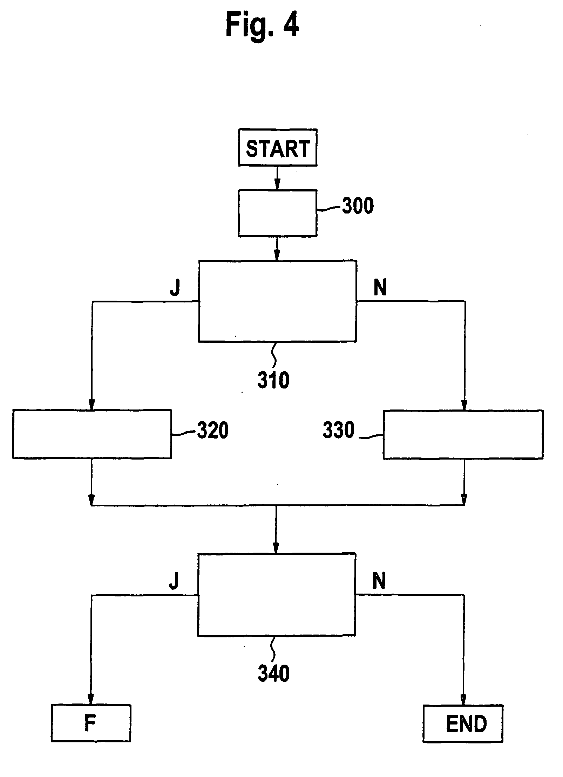

Die Fig. 1 zeigt schematisch die Aufnahme der Betriebsgrößen der Bremsanlage zur Fehlererkennung und die Weiterleitung eines Fehlers an ein steuerndes und/oder regelndes System des Kraftfahrzeugs. Fig. 2a stellt die Vorgehensweise zur Unterscheidung der beiden Betriebsmodi in denen die Fehlererkennung aktiv ist bei einem Bremseingriff durch den Fahrer dar. Fig. 2b stellt die Berechnung der Offset-korrigierten Drucksignale dar. In den Fig. 3 und 4 sind die Flussdiagramme dargestellt, die eine bevorzugte Erkennung der Fehlfunktion in den beiden Betriebsmodi erlauben.

Ausführungsbeispiele

Figur 1 zeigt ein Ausführungsbeispiel zur Überwachung einer Bremsanlage. Dabei werden dem Block 10 die den Bremdruck repräsentierenden Drucksignale $p_n$ der Radbremsen an jeder einzelnen Achse zugeführt. Zur übersichtlichen Darstellung sind in Figur 1 jedoch nur die Drucksignale $p_{vr}$ (20) und $p_{vl}$ (22) einer einzelnen Achse mit 2 Radbremsen eingezeichnet. Dabei repräsentiert $p_{vr}$ das Bremsdrucksignal in der vorderen rechten Radbremse und $p_{vl}$ das Bremsdrucksignal in der vorderen linken Radbremse. Eine Erweiterung auf mehrere Achsen sowie auf zusätzliche Radbremsen pro Achse ist jedoch leicht möglich. Zusätzlich zu den Drucksignalen der Radbremsen wird dem Block 10 das Drucksignal $p_V$ (30) für den Vordruck im Hauptzylinder übertragen. Weiterhin werden dem Block 10 Zustandskennungen von Bremseingriffen in Form von Flags zugeführt. Dabei entspricht das ungesetzten Flag 0 dem Betrieb der Bremsanlage ohne Bremseingriff und das gesetzten Flag 1 dem Vorhandensein eines Bremseingriffs. Zur Unterscheidung der verschiedenen möglichen Bremseingriffe werden unterschiedliche Flags bestimmt und dem Block 10 zugeführt. So wird die Betätigung der Bremsanlage durch den Fahrer durch das Flag $F_B$, der Eingriff eines Antiblockiersystems (ABS) auf die Bremsanlage durch das Flag $F_{ABS}$ der Eingriff eines Antriebsschlupfreglers (ASR) durch das Flag $F_{ASR}$ sowie der Eingriff einer allgemeinen Fahrzeugregelung durch das Flag $F_R$ dargestellt. Weiterhin wird dem Block 10 durch einen Taktgeber t (48) die Möglichkeit gegeben, die Zeitdifferenz $\Delta t$ zum letzten Bremseingriff zu bestimmen. Die geschieht dadurch , dass die Zeitmessung durch den Wechsel eines Flags von 1 auf 0 gestartet wird.

Anhand der eingelesenen Werte 20 - 46 sowie der Zeitmessung $\Delta t$ in Verbindung mit dem Taktgeber t (48) wird im Block 10 eine Fehlfunktion der Bremsanlage eines Kraftfahrzeugs erkannt, wie sie in Figur 2 dargestellt ist. Aufgrund der erkannten Fehlfunktion (Signal F) wird in einem zweiten Block 50 die steuernde und/oder regelnde Funktion eines Systems zum Betrieb eines Kraftfahrzeugs modifiziert. Dabei kann Block 50 beispielsweise ein eingangs erwähntes Lenksystem repräsentieren, das einen Zusatzlenkwinkel abhängig vom Betriebszustand der Bremsanlage erzeugt.

In Figur 2 wird ein Ausführungsbeispiel der Erkennung einer Fehlfunktion einer Bremsanlage eines Kraftfahrzeugs dargestellt. Das skizzierte Programm wird während des gesamten Betriebs zu vorgegebenen Zyklen gestartet. Das Flußdiagramm stellt im Wesentlichen die Situation bei der Erkennung zweier unterschiedlicher Betriebsmodi bei einem fahrerabhängigen Bremseingriff dar.

Zunächst werden dazu im Schritt 100 die Flags für einen fahrerabhängigen Bremseingriff $F_B$ sowie für einen fahrerunabhängigen Bremseingriff wie einem Antiblockiersystem (ABS) $F_{ABS}$, einem Antriebsschlupfregler (ASR) $F_{ASR}$ bzw. einer allgemeinen Fahrzeugregelung $F_R$ abgefragt. Daneben wird die Zeitdifferenz $\Delta t$ bestimmt, die seit dem letzten Eingriff eines fahrerunabhängigen Bremseingriffs vergangen.ist. Im darauf folgenden Schritt 105 werden die Drucksignale $p_n$ jeder einzelnen Radbremse eingelesen. In Schritt 110 wird jedes einzelne Drucksignal auf die Einhaltung des durch die Bauart des zugehörigen Drucksensors vorgegeben Meßbereichs überwacht. Liegt eines der Drucksignale außerhalb des Meßbereichs, wird auf Fehler (Signal F/Fig. 1) erkannt. Anschließend wird in Schritt 115 als Schätzwert für den Druckoffset der gespeicherte Wert des Offsets aus dem letzten Programmzyklus verwendet. Mit diesem Druckoffset werden somit die offset-korrigierten Drucksignale $p_{korr,n}$ bestimmt.

Im nächsten Schritt 120 wird überprüft, ob eine ggf. vorhandene Antriebsschlupfregelung den Antriebsschlupf eines Rades regelt bzw. steuert. Dabei wird die Abarbeitung des Programms nur dann fortgesetzt, wenn der Antriebsschlupfregler (ASR) nicht aktiv ist ($F_{ASR}=0$) und eine bestimmte Latenzzeit $t_{ASR}$ seit der letzten Betätigung des Antriebsschlupfreglers (ASR) vergangen ist ($\Delta t > t_{ASR}$). Im Schritt 125 wird allgemein der Bremseingriff eines Fahrzeugreglers $F_R$ geprüft. Das Programm wird fortgesetzt, wenn ein Fahrzeugregler nicht aktiv ist ($F_R=0$) und eine bestimmte Latenzzeit $t_R$ seit dem letzten Eingriff eines Fahrzeugreglers vergangen ist ($\Delta t > t_R$). Der darauf folgenden Schritt 130 überprüft die Betätigung der Bremsanlage durch den Fahrer des Kraftfahrzeugs anhand des gesetzten Flags $F_B$ für den fahrerabhängigen Bremseingriff. Liegt kein Bremseingriff durch den Fahrer vor ($F_B=0$) und ist eine bestimmte Latenzzeit $t_B$ seit der letzten Betätigung der Bremsanlage durch den Fahrer vergangen ($\Delta t > t_R$), so wird im Schritt 135 die Berechnung des Offsets durchgeführt. Dabei wird zur Abschätzung des Offsets der Drucksignale jedes Drucksignal einzeln über einen Tiefpassfilter geleitet. Der Filter wird angehalten, sobald eine Fahrerbremsung oder ein Bremseingriff stattfindet. Die Filterung wird erneut aufgenommen, wenn eine vorgegebene Latenzzeit nach der letzten Fahrerbremsung oder dem letzten Bremseingriff abgelaufen ist. Die ermittelten Absoultbeträge der Offsetwerte werden in Schritt 140 auf das Überschreiten einer Offset-Schwelle hin überprüft. Bei Überschreiten der Offset-Schwelle wird auf Fehler (Signal F/Fig. 1) erkannt. Falls kein Fehler aufgetreten ist, wird im Schritt 145 eine Nullwert-Überwachung der Radbremsdrücke durchgeführt. Diese Nullwert-Überwachung basiert auf der Tatsache, dass alle Radbremsdrücke (bis auf geringfügige Meßfehler) gleich Null sein müssen, wenn keine Fahrerbremsung und kein Bremseingriff stattfindet. Auf Nullwert-Fehler (Signal F/Fig. 1) wird erkannt, wenn die Absolutbeträge der korrigierten Drükke eine Nullwert-Schwelle überschreiten und gleichzeitig keine Fahrerbremsung und kein Bremseingriff stattfindet bzw. innerhalb einer Latenzzeit stattgefunden hat. Wird kein Fehler erkannt, wird das Programm beendet und beim nächsten Abfragezyklus neu gestartet.

Wird in Schritt 130 die Betätigung der Bremsanlage durch den Fahrer des Kraftfahrzeugs anhand des gesetzten Flags $F_B$ ($F_B=1$) festgestellt oder liegt die Zeit, die seit dem letzten Bremseingriff durch den Fahrer vergangen ist, unter der Latenzzeit $t_B$, so wird in Schritt 160 überprüft, ob ein Bremseingriff durch ein Antiblockiersystem (ABS) stattfindet (Flag $F_{ABS}$) und der letzte Eingriff eines Antiblockiersystems länger als eine bestimmte Latenzzeit $t_{ABS}$ zurückliegt. Aufgrund dieser Überprüfung wird die anschließende Fehlererkennung in den Betriebsmodi I (Schritt 170) bzw. II (Schritt 180) aufgespalten. Betriebsmodus I (Schritt 170) wird für den Fall $F_{ABS}$ = 0 und ($\Delta t > t_{ABS}$) durchlaufen, d.h. der fahrerabhängige Bremseingriff erfolgt ohne eine zusätzliche Bremsregelung durch das Antiblockiersystem (ABS) und die Latenzzeit für den Eingriff eines Antiblockiersystems (ABS) ist überschritten. Betriebsmodus II (Schritt 180) mit $F_{ABS}$ = 1 wird hingegen durchlaufen, wenn der fahrerabhängige Bremseingriff mit einer zusätzlichen Bremsregelung durch das Antiblockiersystem (ABS) erfolgt oder die Latenzzeit für den Eingriff eines Antiblockiersystems (ABS) noch nicht überschritten ist.

In Figur 3 ist eine detaillierte Darstellung der Fehlererkennung des Betriebsmodus I (170 aus Figur 2) dargestellt, d.h. für den Fall, dass keine radindividuellen Bremseingriffe insbesondere durch das Antiblockiersystem (ABS) unabhängig vom Fahrer erfolgen. Das Flußdiagramm stellt die Situation bei der Fehlererkennung aufgrund der Überschreitung von Druckdifferenzen der Bremsdrücke an den Radbremsen einer Achse des Kraftfahrzeugs dar. Für die weiteren vorkommenden Achsen des Kraftfahrzeugs wird ein entsprechendes Programm durchlaufen bzw. das skizzierte Programm nacheinander für jede Achse durchlaufen.

Im ersten Schritt 200 wird aus den offset-korrigierten Radbremsdrücken (115) die Bremsdruckgröße $\Delta p_{korr}$ als die Druckdifferenz der Bremsdrücke an den Radbremsen einer Radachse bestimmt. Im Schritt 205 werden aus den offset-korrigierten Bremsdruckgrößen der gemittelte Bremsdruck über alle Radbremsen N gemäß:

$$p_m = \frac{1}{N}\sum_{n=1}^{N} p_{korr,n}$$

ermittelt. Die Abschätzung der Anstiegsgeschwindigkeit der gemittelten Bremsdruckgrößen erfolgt in Schritt 210 über den Differenzenquotienten

$$gp_m = \frac{p_m[k] - p_m[k-1]}{T},$$

wobei k und k-1 zwei aufeinander folgenden Zeitpunkte repräsentieren, zu denen der gemittelte Bremsdruck bestimmt wird und T die zeitliche Differenz zwischen diesen beiden Zeitpunkten darstellt. Anschließend wird in Schritt 215 der Absolutbetrag des Differenzenquotienten $gp_m$ gebildet und zum Ausgleich eines kurzfristigen Einbruchs gemäß:

$$gp\max = \max\left\{\left|\,gp_m\left[k\right]\right|, \left|\,gp_m\left[k-1\right]\right|\right\}$$

über wenigstens zwei Bestimmungen des Differenzenquotienten $gp_m$ der Maximalwert $gp_{max}$ bestimmt. Der dabei resultierende Differenzenquotient $gp_{max}$ wird in Schritt 220 mit einer für die Bremsanlage typischen unteren Kennzahl $gp_0$ verglichen. Bei Unterschreitung oder Erreichen der Kennzahl $gp_0$ wird der zulässige Schwellwert für die Bremsdruckdifferenz $\Delta p_{zul}$ an den Radbremsen in Schritt 235 auf einen unteren, von der Bauart der Bremsanlage abhängigen, festgelegten Wert $\Delta p_{zul,o}$ gesetzt. Für den Fall, dass der Differenzenquotient $gp_{max}$ größer als $gp_0$ ist, wird im Schritt 225 der Differenzenquotient $gp_{max}$ mit einer für die Bremsanlage typischen oberen Kennzahl $gp_1$ verglichen. Bei Unterschreitung oder Erreichen dieser Kennzahl $gp_1$ wird der zulässige Schwellwert für die Bremsdruckdifferenz $\Delta p_{zul}$ an den Radbremsen in Schritt 240 auf einen Wert gemäß

$$\Delta p_{zul} = \Delta p_{zul,0} + \frac{\Delta p_{zul,1} - \Delta p_{zul,0}}{gp_1 - gp_0} gp_{max}$$

gesetzt, wobei $\Delta p_{zul,0}$ und $\Delta p_{zul,1}$ zwei aufgrund der Bauart der Bremsanlage festgelegte Werte sind. Im Schritt 230 wird abschließend der Fall überprüft, dass der Differenzenquotient $gp_{max}$ oberhalb der Kennzahl $gp_1$ liegt. Der zulässige Schwellwert für die Bremsdruckdifferenz $\Delta p_{zul}$ an den Radbremsen wird dann in Schritt 245 auf einen oberen, von der Bauart der Bremsanlage abhängigen, festgelegten Wert $\Delta p_{zul,1}$ gesetzt. Übersteigt in Schritt 250 die ermittelte Größe $\Delta p_{korr}$ aus Schritt 200 für die Bremsdruckdifferenz der Radbremsen an wenigstens einer Achse den ermittelten zulässigen Schwellwert $\Delta p_{zul}$ aus den Schritten 235 - 245, so wird auf Fehler (Signal F/Fig. 1) erkannt. Andernfalls wird das Programm zurückgesetzt und beim nächsten Abfragezyklus neu gestartet.

In Figur 4 ist eine detaillierte Darstellung der Fehlererkennung des Betriebsmodus II (180 aus Figur 2) dargestellt, d.h. für den Fall, dass ein radindividueller Bremseingriff insbesondere ein Eingriff durch das Antiblockiersystem (ABS) während eines Bremsvorgangs durch den Fahrer erfolgt. Das Flussdiagramm stellt die Situation bei der Fehlererkennung aufgrund der Überschreitung von Druckdifferenzen der Bremsdrücke an den Radbremsen einer Achse des Kraftfahrzeugs dar. Für die weiteren vorkommenden Achsen des Kraftfahrzeugs wird ein entsprechendes Programm durchlaufen bzw. das skizzierte Programm nacheinander für jede Achse durchlaufen.

In Schritt 300 werden wie in Schritt 200 (Figur 2) aus den offset-korrigierten Radbremsdrücken die Bremsdruckgröße $\Delta P_{korr}$ als Druckdifferenz der Bremsdrücke an den Radbremsen einer Radachse bestimmt. Weiterhin werden das Drucksignal $p_v$ für den Vordruck im Hauptbremszylinder der Bremsanlage und der Differenzenquotient $gp_m$ als Maß für die Dynamik des mittleren Bremsdrucks an den Radbremsen einer Achse erfaßt. Anschließend wird in Schritt 310 überprüft, ob das Drucksignal für den Vordruck einen vorgegebenen Schwellwert $\Delta p_{ABS,0}$ unterschreitet und gleichzeitig der mittlere Bremsdruck an den Radbremsen einer Achse in. Form eines negativen Differenzengradienten abfällt. Ist dies der Fall, so wird in Schritt 320 der zulässige Schwellwert $\Delta p_{ABS,S}$ für die Druckdifferenz auf den vorgegebenen Grenzwert $\Delta p_{ABS,0}$ gesetzt. Liegt eine der Bedingungen in Schritt 310 nicht vor, so wird der zulässige Schwellwert $\Delta p_{ABS,S}$ für die Druckdifferenz in Schritt 330 gleich dem Drucksignal des Vordrucks gesetzt. Übersteigt die erfaßte Bremsdruckdifferenz $\Delta p_{korr}$ aus Schritt 300 den ermittelten Schwellwert $\Delta p_{ABS,S}$, so wird in Schritt 340 auf Fehler (Signal F/Fig. 1) erkannt. Andernfalls wird das Programm zurückgesetzt und beim nächsten Abfragezyklus neu gestartet.

Zusammenfassend wird ein Verfahren und eine Vorrichtung zur Überwachung einer Bremsanlage, insbesondere einer Raddrucksensorik einer Bremsanlage eines Kraftfahrzeugs vorgeschlagen, bei der die Fehlererkennung (Block 10) aufgrund der Überschreitung einer Differenz-Schwelle (250, 340) durch ein Signal erfolgt, welches repräsentativ für die Differenz der Bremsdrücke an den einzelnen Radbremsen einer Radachse ist. Dabei wird die Differenz-Schwelle in Abhängigkeit von der mittleren Anstiegsgeschwindigkeit der Einzeldrücke an den Radbremsen gesetzt (235 bis 245, 320 bis 330). Die Fehlererkennung erfolgt auf der Basis eines Modells, welches den aktuellen Betriebszustand der Bremsanlage berücksichtigt.

**Patentansprüche**

1. Verfahren zur Erkennung einer Fehlfunktion einer Bremsanlage eines Kraftfahrzeugs, insbesondere zur Erkennung einer Fehlfunktion einer Raddrucksensorik einer Bremsanlage eines Kraftfahrzeugs, bei der während der Betätigung der Bremsanlage wenigstens zwei Betriebsmodi (170, 180) vorliegen können, wobei

   - eine Fehlfunktion auf eine erste Weise während des Vorliegens eines ersten Betriebsmodus (170) und
   - eine Fehlfunktion auf eine zweite Weise während des Vorliegens eines zweiten Betriebsmodus (180)

   erkannt wird,
   wobei die Bremsanlage derart ausgestaltet ist, dass Bremseingriffe unabhängig vom Wunsch des Fahrers des Kraftfahrzeugs vorgenommen werden können, und

- das Vorliegen des ersten Betriebsmodus (170) dann erkannt wird, wenn während eines Bremsvorgangs kein radindividueller Bremseingriff stattfindet und
- das Vorliegen des zweiten Betriebsmodus (180) dann erkannt wird, wenn während eines Bremsvorgangs ein radindividueller Bremseingriff stattfindet, wobei
- bei der Betätigung der Bremsanlage Bremsdrücke an den Radbremsen modifiziert werden und
- das Kraftfahrzeug wenigstens eine Radachse aufweist und
- Bremsdruckgrößen ($p_{vr}$ (20), $p_{vl}$ (22)) erfaßt werden, die den Bremsdruck an wenigstens zwei Radbremsen einer Achse repräsentieren, und
- eine die Differenz der erfaßten Radbremsdrücke repräsentierende Differenzgröße ($\Delta p_{korr}$ (200, 300)) ermittelt wird und
- die Fehlererkennung aufgrund der Überschreitung einer Differenz-Schwelle durch die Differenzgröße erfolgt (250, 340),
- die Differenz-Schwelle unterschiedliche Werte annimmt,

wobei beim Erkennen des ersten Betriebsmodus die unterschiedlichen Werte für die Differenz-Schwelle aufgrund der Anstiegsgeschwindigkeit des über alle Bremsdruckgrößen einer Achse gemittelten Bremsdrucks (205) gesetzt werden (235 bis 245).

2. Verfahren nach Anspruch 1, **dadurch gekennzeichnet, dass** die Fehlererkennung an einem Kraftfahrzeug mit wenigstens zwei Radachsen durchgeführt wird, wobei die Fehlererkennung bei jeder Radachse getrennt voneinander durchgeführt werden kann

3. Verfahren nach Anspruch 1, **dadurch gekennzeichnet, dass** die Anstiegsgeschwindigkeit durch eine Abschätzung mit Hilfe eines Differenzenquotienten (210) ermittelt wird, wobei der Differenzenquotient abhängig von der Differenz zweier zu unterschiedlichen Zeiten erfaßten gemittelten Bremsdruckgrößen bestimmt wird.

4. Verfahren nach Anspruch 3, **dadurch gekennzeichnet, dass** zur Abschätzung der Anstiegsgeschwindigkeit ein Maximalwert (215) aus wenigstens zwei Differenzenquotienten herangezogen wird.

5. Verfahren nach Anspruch 1, **dadurch gekennzeichnet, dass** als Bremsdruckgrößen die offsetkorrigierten Bremsdruckgrößen ($p_{korr,n}$ (115)) herangezogen werden, wobei der Offset (135) aus dem

tiefpass-gefilterten Bremsdrucksignal ($p_n$ (105)) jeder einzelnen Radbremse abgeschätzt wird.

6. Verfahren nach Anspruch 1, **dadurch gekennzeichnet, daß** bei der Bremsanlage ein Hauptbremszylinder zur Aufbringung eines Bremsvordrucks vorgesehen ist und beim Erkennen des zweiten Betriebsmodus (180) der Wert für die Differenz-Schwelle in Abhängigkeit

- von einer den Vordruck im Hauptbremszylinder repräsentierenden Vordruckgröße ($p_v$ (30)) und
- von der Anstiegsgeschwindigkeit des über alle Bremsdruckgrößen einer Achse gemittelten Bremsdrucks (205), insbesondere vom Differenzenquotienten ($gp_m$ (300)),

gesetzt wird.

7. Verfahren nach Anspruch 1, **dadurch gekennzeichnet, dass** nach einem radindividuellen Bremseingriff die Fehlererkennung eine vorgebbare Zeitdauer wenigstens modifiziert wird, wobei insbesondere vorgesehen ist, dass nach einem radindividuellen Bremseingriff die Fehlererkennung eine vorgebbare Zeitdauer ausgesetzt wird (160).

8. Vorrichtung zur Erkennung einer Fehlfunktion einer Bremsanlage eines Kraftfahrzeugs, insbesondere zur Erkennung einer Fehlfunktion einer Raddrucksensorik einer Bremsanlage eines Kraftfahrzeugs, wobei während der Betätigung der Bremsanlage wenigstens zwei Betriebsmodi (170, 180) vorliegen können, bei der Mittel vorgesehen sind, mittels der

- eine Fehlfunktion auf eine erste Weise während des Vorliegens eines ersten Betriebsmodus (170) erkannt wird, und
- eine Fehlfunktion auf eine zweite Weise während des Vorliegens eines zweiten Betriebsmodus (180) erkannt,

wobei die Bremsanlage derart ausgestaltet ist, dass Bremseingriffe unabhängig vom Wunsch des Fahrers des Kraftfahrzeugs vorgenommen werden können, und die Mittel derart ausgestaltet sind, dass

- das Vorliegen des ersten Betriebsmodus (170) dann erkannt wird, wenn während eines Bremsvorgangs kein radindividueller Bremseingriff stattfindet und
- das Vorliegen des zweiten Betriebsmodus (180) dann erkannt wird, wenn während eines Bremsvorgangs ein radindividueller Bremseingriff stattfindet, wobei
- bei der Betätigung der Bremsanlage Bremsdrücke an den Radbremsen modifiziert werden und

- das Kraftfahrzeug wenigstens eine Radachse aufweist und

- Bremsdrückgrößen ($p_{vr}$ (20), $p_{vl}$ (22)) erfaßt werden, die den Bremsdruck an wenigstens zwei Radbremsen einer Achse repräsentieren, und

- eine die Differenz der erfaßten Radbremsdrücke repräsentierende Differenzgröße ($\Delta p_{korr}$ (200, 300)) ermittelt wird und

- die Fehlererkennung aufgrund der Überschreitung einer Differenz-Schwelle durch die Differenzgröße erfolgt (250, 340),

- die Differenz-Schwelle unterschiedliche Werte annimmt,

wobei beim Erkennen des ersten Betriebsmodus die unterschiedlichen Werte für die Differenz-Schwelle aufgrund der Anstiegsgeschwindigkeit des über alle Bremsdruckgrößen einer Achse gemittelten Bremsdrucks (205) gesetzt werden (235 bis 245).

**Claims**

1. Method for detecting a malfunction of a brake system of a motor vehicle, in particular for detecting a malfunction of a wheel pressure sensor system of a brake system of a motor vehicle, in which at least two operating modes (170, 180) may be present during operation of the brake system,

   - a malfunction being detected in a first manner while a first operating mode (170) is present, and
   - a malfunction being detected in a second manner while a second operating mode (180) is present,

   the brake system being configured in such a manner that brake interventions can be carried out irrespective of the wish of the motor vehicle driver, and

   - the presence of the first operating mode (170) being detected when no wheel-specific brake intervention takes place during a braking operation, and
   - the presence of the second operating mode (180) being detected when a wheel-specific brake intervention takes place during a braking operation,
   - brake pressures at the wheel brakes being modified during operation of the brake system, and
   - the motor vehicle having at least one wheel axle, and
   - brake pressure variables ($p_{vr}$ (20), $p_{vl}$ (22)) which represent the brake pressure at at least two wheel brakes of an axle being recorded, and
   - a differential variable ($\Delta_{pkorr}$ (200, 300)) which

represents the difference between the recorded wheel brake pressures being determined, and

   - faults being detected on the basis of a differential threshold being exceeded by the differential variable (250, 340),
   - the differential threshold assuming different values,

   the different values for the differential threshold being set (235 to 245), during detection of the first operating mode, on the basis of the rate of rise of the brake pressure (205) averaged over all brake pressure variables of an axle.

2. Method according to Claim 1, **characterized in that** faults are detected in a motor vehicle having at least two wheel axles, faults being able to be detected separately from one another for each wheel axle.

3. Method according to Claim 1, **characterized in that** the rate of rise is determined by means of an estimation with the aid of a differential quotient (210), the differential quotient being determined on the basis of the difference between two averaged brake pressure variables recorded at different times.

4. Method according to Claim 3, **characterized in that** a maximum value (215) from at least two differential quotients is used to estimate the rate of rise.

5. Method according to Claim 1, **characterized in that** the offset-corrected brake pressure variables ($p_{korr,n}$ (115)) are used as the brake pressure variables, the offset (135) being estimated from the low-pass-filtered brake pressure signal ($p_n$ (105)) from each individual wheel brake.

6. Method according to Claim 1, **characterized in that** a brake master cylinder for applying a brake pilot pressure is provided in the brake system, and the value for the differential threshold is set, during detection of the second operating mode (180), on the basis

   - of a pilot pressure variable ($p_v$ (30)) which represents the pilot pressure in the brake master cylinder, and
   - of the rate of rise of the brake pressure (205) averaged over all brake pressure variables of an axle, in particular the differential quotient ($gp_m$ (300)).

7. Method according to Claim 1, **characterized in that** the fault detection is at least modified for a predefinable period of time following a wheel-specific brake intervention, provision being made, in particular, for the fault detection to be suspended (160) for a predefinable period of time following a wheel-specific brake intervention.

8. Device for detecting a malfunction of a brake system of a motor vehicle, in particular for detecting a malfunction of a wheel pressure sensor system of a brake system of a motor vehicle, at least two operating modes (170, 180) being able to be present during operation of the brake system, in which provision is made of means which are used

- to detect a malfunction in a first manner while a first operating mode (170) is present, and
- to detect a malfunction in a second manner while a second operating mode (180) is present,

the brake system being configured in such a manner that brake interventions can be carried out irrespective of the wish of the motor vehicle driver, and the means being configured in such a manner that

- the presence of the first operating mode (170) is detected when no wheel-specific brake intervention takes place during a braking operation, and
- the presence of the second operating mode (180) is detected when a wheel-specific brake intervention takes place during a braking operation,
- brake pressures at the wheel brakes being modified during operation of the brake system, and
- the motor vehicle having at least one wheel axle, and
- brake pressure variables ($p_{vr}$ (20), $p_{vl}$ (22)) which represent the brake pressure at at least two wheel brakes of an axle being recorded, and
- a differential variable ($\Delta_{pkorr}$ (200, 300)) which represents the difference between the recorded wheel brake pressures being determined, and
- faults being detected on the basis of a differential threshold being exceeded by the differential variable (250, 340),
- the differential threshold assuming different values,

the different values for the differential threshold being set (235 to 245), during detection of the first operating mode, on the basis of the rate of rise of the brake pressure (205) averaged over all brake pressure variables of an axle.

**Revendications**

1. Procédé de détection d'un défaut de fonctionnement d'une installation de frein d'un véhicule automobile, en particulier de détection d'un défaut de fonctionnement de l'ensemble de détecteurs de pression de roue d'une installation de freinage d'un véhicule automobile dans laquelle au moins deux modes de fonctionnement (170, 180) peuvent exister pendant l'actionnement de l'installation de freinage, et dans lequel :

- un défaut de fonctionnement est détecté d'une première manière pendant qu'on se trouve dans un premier mode de fonctionnement (170) et
- un défaut de fonctionnement est détecté d'une deuxième manière pendant qu'on se trouve dans un deuxième mode de fonctionnement (180),

l'installation de freinage étant configurée de telle sorte que les actions de freinage peuvent être exécutées indépendamment du souhait du conducteur du véhicule automobile et
dans lequel:

- la présence du premier mode de fonctionnement (170) est détectée lorsqu'aucune action de freinage sur une roue individuelle n'a lieu pendant une opération de freinage et
- la présence du deuxième mode de fonctionnement (180) est détectée lorsqu'une action de freinage sur une roue individuelle a lieu pendant une opération de freinage,
- l'actionnement de l'installation de freinage modifiant la pression de freinage sur les freins de roues,
- le véhicule présentant au moins un essieu,
- des grandeurs ($p_{vr}$ (20), $p_{vl}$ (22)) de pression de freinage qui représentent la pression de freinage sur au moins deux freins de roues d'un essieu sont détectées,
- une grandeur de différence ($\Delta_{pkorr}$ (200, 300)) qui représente la différence entre les pressions détectées sur les freins de roues est déterminée (250, 340) au cas où la grandeur de différence dépasse un seuil de différence,
- le seuil de différence prenant différentes valeurs,

et lorsque le premier mode de fonctionnement est détecté, les différentes valeurs du seuil de différence sont fixées (235 à 245) sur base de la vitesse de montée de la pression de freinage (205) qui est la moyenne de toutes les grandeurs de pression de freinage sur un essieu.

2. Procédé selon la revendication 1, **caractérisé en ce que** la détection d'un défaut sur un véhicule automobile est réalisée sur au moins deux essieux de roues, la détection du défaut pouvant être réalisée séparément sur chaque essieu de roue.

3. Procédé selon la revendication 1, **caractérisé en**

**ce que** la vitesse de montée est déterminée par une estimation à l'aide d'un quotient de différences (210), le quotient de différences étant déterminé en fonction de la différence entre de deux grandeurs moyennes de pression de freinage détectées à des instants différents.

4. Procédé selon la revendication 3, **caractérisé en ce que** pour estimer la vitesse de montée, on utilise le plus grand (215) d'au moins deux quotients de différences.

5. Procédé selon la revendication 1, **caractérisé en ce que** comme grandeurs de pression de freinage, on utilise les grandeurs de pression de freinage ($\Delta p_{korr,n}$ (115)) après correction du décalage, le décalage (135) étant estimé à partir du signal ($p_n$ (105)) de pression de freinage sur chaque frein de roue après filtrage passe-bas.

6. Procédé selon la revendication 1, **caractérisé en ce que** l'installation de freinage présente un maître-cylindre de frein qui applique une pré-pression de freinage et **en ce que** lorsque le deuxième mode de fonctionnement (180) est détecté, la valeur du seuil de différence est fixée en fonction

   - d'une grandeur ($p_v$ (30)) de pré-pression qui représente le maître-cylindre de frein et
   - de la vitesse de montée de la moyenne des pressions de freinage (205) calculée sur toutes les grandeurs de pression de freinage d'un essieu et en particulier du quotient de différences ($gp_m$ (300)).

7. Procédé selon la revendication 1, **caractérisé en ce qu'**après l'action de freinage sur les roues individuelles, la détection des défauts est au moins modifiée pendant une durée prédéterminée et **en ce qu'**en particulier, après une action de freinage sur une roue individuelle, la détection des défauts est désactivée (160) pendant une durée prédéterminée.

8. Dispositif de détection d'un défaut de fonctionnement d'une installation de frein d'un véhicule automobile, en particulier de détection d'un défaut de fonctionnement de l'ensemble de détecteur de pression de roue d'une installation de freinage d'un véhicule automobile dans laquelle au moins deux modes de fonctionnement (170, 180) peuvent exister pendant l'actionnement de l'installation de freinage, et qui présente des moyens par lesquels :

   - un défaut de fonctionnement est détecté d'une première manière pendant qu'on se trouve dans un premier mode de fonctionnement (170) et
   - un défaut de fonctionnement est détecté d'une deuxième manière pendant qu'on se trouve dans un deuxième mode de fonctionnement (180),

l'installation de freinage étant configurée de telle sorte que les actions de freinage peuvent être exécutées indépendamment du souhait du conducteur du véhicule automobile,
les moyens étant configurés de telle sorte que :

   - la présence du premier mode de fonctionnement (170) est détectée lorsqu'aucune action de freinage sur une roue individuelle n'a lieu pendant une opération de freinage et
   - que la présence du deuxième mode de fonctionnement (180) est détectée lorsqu'une action de freinage sur une roue individuelle a lieu pendant une opération de freinage,
   - l'actionnement de l'installation de freinage modifiant la pression de freinage sur les freins de roues,
   - le véhicule présentant au moins un essieu,
   - que des grandeurs ($p_{vr}$ (20), $p_{vl}$ (22)) de pression de freinage qui représentent la pression de freinage sur au moins deux freins de roues d'un essieu sont détectées,
   - qu'une grandeur de différence ($\Delta p_{vr}$ (200, 300)) qui représente la différence entre les pressions détectées sur les freins de roues est déterminée (250, 340) au cas où la grandeur de différence dépasse un seuil de différence,
   - le seuil de différence prenant différentes valeurs,

et que lorsque le premier mode de fonctionnement est détecté, les différentes valeurs du seuil de différence sont fixées (235 à 245) sur base de la vitesse de montée de la pression de freinage (205) qui est la moyenne de toutes les grandeurs de pression de freinage sur un essieu.

# Fig. 1

**Fig. 2**

Fig. 3

# Fig. 4

```
                    ┌─────────┐
                    │  START  │
                    └─────────┘
                         │
                         ▼
                    ┌─────────┐
                    │         │──── 300
                    └─────────┘
                         │
                         ▼
        J      ┌─────────────────┐      N
      ┌────────│                 │────────┐
      │        └─────────────────┘        │
      │                 │                 │
      │                310                │
      │                                   │
      ▼                                   ▼
┌──────────────┐                  ┌──────────────┐
│              │──── 320    330 ──│              │
└──────────────┘                  └──────────────┘
      │                                   │
      └─────────────────┬─────────────────┘
                        │
                        ▼
        J      ┌─────────────────┐      N
      ┌────────│                 │────────┐
      │        └─────────────────┘        │
      │                 │                 │
      │                340                │
      ▼                                   ▼
  ┌───────┐                          ┌───────┐
  │   F   │                          │  END  │
  └───────┘                          └───────┘
```

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3826982 A
- DE 19807366 A1
- DE 19747144 A1
- DE 19935899 A1